# EUROPÄISCHE PATENTANMELDUNG

(11) **EP 0 727 191 A2**
(43) Veröffentlichungstag der Anmeldung: **21.08.1996**
(21) Anmeldenummer: 96102183.9
(22) Anmeldetag: 14.02.1996
(51) Int. Cl.: A61C 5/06

(54) **Behälter zum Lagern und Ausbringen einer Dentalmasse**

(30) Priorität: 20.02.1995 DE 29502783 U
(71) Anmelder: THERA Patent GmbH & Co. KG Gesellschaft für industrielle Schutzrechte, D-82229 Seefeld (DE)
(72) Erfinder: Brandhorst Gerd, D-86899 Landsberg (DE); Herold Wolf-Dietrich, D-82229 Seefeld (DE)
(74) Vertreter: Strehl Schübel-Hopf Groening & Partner

(57) **Zusammenfassung**

Ein Behälter zum Lagern und Ausbringen einer Masse, insbesondere einer Dentalmasse, umfaßt eine zylindrische Kartusche **20** und eine mit dieser kommunizierende Ausbringtülle **21**. Die Ausbringtülle **21** ist als starres gekrümmtes Röhrchen gestaltet, dessen Eintrittsöffnung den gleichen Durchmesser hat wie die Kartusche **20** und mit deren Achse **14** fluchtet, und deren Austrittsöffnung einen für die Handhabung günstigen Winkel mit der Kartuschenachse **14** bildet. Das Röhrchen ist kreisbogenförmig gekrümmt und verjüngt sich derart, daß seine innere Querschnittsform bis zur Spitze durchgehend kreisförmig ist. Innenquerschnitt und Wandstärke der Ausbringtülle **21** verjüngen sich zum Austrittsende hin.

## Beschreibung

Ein Behälter mit den im Oberbegriff des Anspruchs 1 angegebenen Merkmalen ist in US-A-4,295,828 offenbart. Der bekannte Behälter besteht aus einer starren kreiszylindrischen Kartusche, die in ihrem vorderen Bereich in eine gekrümmte, sich zu ihrem Ende hin verjüngenden Ausbringtülle übergeht und in einer zur Kartuschenachse geneigten Austrittsöffnung endet. Zum Entleeren wird die Kartusche mit einem an ihrem hinteren Ende vorhandenen Flansch in ein Applikationsinstrument eingelegt und die Masse durch einen von hinten eingeführten Kolben ausgepreßt.

Dentalmassen, die in derartigen Behältern geliefert werden, sind häufig gegen Scherkräfte und/oder lokale Druckunterschiede empfindlich. Beim Ausbringen wird eine solche Masse an Stellen, an denen sich die Querschnittsform der Kartusche oder ihrer Ausbringtülle ändert, Querkräften ausgesetzt, die zu lokalen Entmischungen und damit unvorhergesehenen Änderungen in den Eigenschaften der Masse führen können. Wegen der bei pastösen Massen erheblichen Ausbringdrücke können schon verhältnismäßig geringe Änderungen der Querschnittsform schädlich sein.

Zum genauen Ausbringen der Masse auf örtlich begrenzte Behandlungsstellen, etwa direkt in Zahnkavitäten, ist es zweckmäßig, die Ausbringtülle möglichst dünn und den Winkel zwischen ihrer Achse und der Längsachse am Eintrittsende der Kartusche nicht zu klein zu machen.

Der aus US-A-4,295,828 bekannte Behälter ist unter diesen beiden Gesichtspunkten nicht optimal. Am Übergang zwischen Kartusche und Tülle ändert sich die Querschnittsform, und der Ausbringwinkel ist klein; ein größerer Winkel würde in einer noch deutlicheren Querschnittsänderung resultieren, wie dies etwa bei der Kartusche nach DE-A-3 839 979 zu sehen ist.

Aus DE-B-2 741 184 ist ein Behälter bekannt, der einen bis zur Austrittsöffnung konstanten Querschnitt hat. Abgesehen davon, daß der verhältnismäßig große Öffnungsquerschnitt bei der praktischen Anwendung nachteilig ist, erfordert der dort angewandte Aufbau aus einem flexiblen Röhrchen und einer äußeren Versteifung eine aufwendige Herstellung.

Die gleiche Schwierigkeit besteht bei dem aus US-A-5,249,716 bekannten Behälter, bei dem der die Masse enthaltende flexible Schlauch erst beim Ausbringen und auch nur über einen Teil seiner Länge durch ein aufgeschobenes starres, gekrümmtes Führungsrohr geschützt ist, im übrigen aber jedwede seitlichen Druckeinwirkungen an die Masse weitergibt.

Der Erfindung liegt die Aufgabe zugrunde, einen Behälter insbesondere für Dentalmassen anzugeben, mit dem sich vor allem Massen, die gegen Scherkräfte und/oder lokale Druckunterschiede empfindlich sind, problemloser lagern und ausbringen lassen.

Die erfindungsgemäße Lösung dieser Aufgabe ist im Anspruch 1 gekennzeichnet. Danach werden plötzliche Querschnitts- und Richtungsänderungen beim Ausbringen der Masse vollständig vermieden und somit die Masse keinen lokalen Quer- oder Scherkräften ausgesetzt. Dennoch wird ein für die praktische Handhabung günstiger Ausbringwinkel bei kleinen Querschnitt der Austrittsöffnung erreicht. Die bei der Erfindung vorgesehene Kreisbogenform der Krümmung ist für leichte Entformbarkeit der Ausbringtülle von Bedeutung.

Die Maßnahme des Anspruchs 2 ist nicht nur für die Fertigung sondern auch für die Handhabung günstig. Die Richtung der Tülle läßt sich nach Einsetzen des Behälters in das betreffende Applikationsinstrument unmittelbar vor dem Ausbringvorgang in der gewünschten Weise ausrichten.

Eine für die Montage des Behälters besonders einfache Gestaltung ist in Anspruch 3 angegeben.

Die in den Ansprüchen 4 und 5 angegebene Ausgestaltung ist im Hinblick auf eine einfache Fertigung des Behälters von Vorteil. Dabei sorgt die Maßnahme des Anspruchs 6 für eine verdrehsichere Aufnahme der Kartusche in einem Applikationsinstrument.

Die Gestaltung nach Anspruch 7 gestattet es, bei verhältnismäßig großem Innenquerschnitt und daher entsprechend geringerer Länge der Kartusche auch kleine Mengen genau auszubringen.

Die in den Ansprüchen 8 bis 11 angegebenen Maße beziehen sich auf eine Gestaltung des Behälters, der sich insbesondere zum direkten Ausbringen von Dentalmassen in Zahnkavitäten eignet.

Die Maßnahme des Anspruchs 12 ist bei lichtempfindlichen Massen zweckmäßig; das Merkmal des Anspruchs 13 gestattet eine übersichtliche Kennzeichnung des Behälterinhalts.

Anspruch 14 betrifft eine zweckmäßige Maßnahme, den Behälterinhalt während der Lagerung zu schützen, gleichzeitig aber einen Druckausgleich bei Temperatur- oder Druckänderungen zu schaffen.

Bevorzugte Ausführungsbeispiele der Erfindung werden nachstehend anhand der Zeichnung näher erläutert. Darin zeigt
- Figur 1: einen Längsschnitt durch einen Behälter für eine Dentalmasse im zerlegten Zustand mit einer nicht geschnitten dargestellten Verschlußkappe,
- Figur 2: einen Längsschnitt durch einen Behälter in einer anderen Ausführung,
- Figur 3: eine Stirnansicht des hinteren Kartuschenendes, und
- Figur 4: einen Schnitt durch eine bei dem Behälter nach Figur 1 oder 2 verwendbare Verschlußkappe.

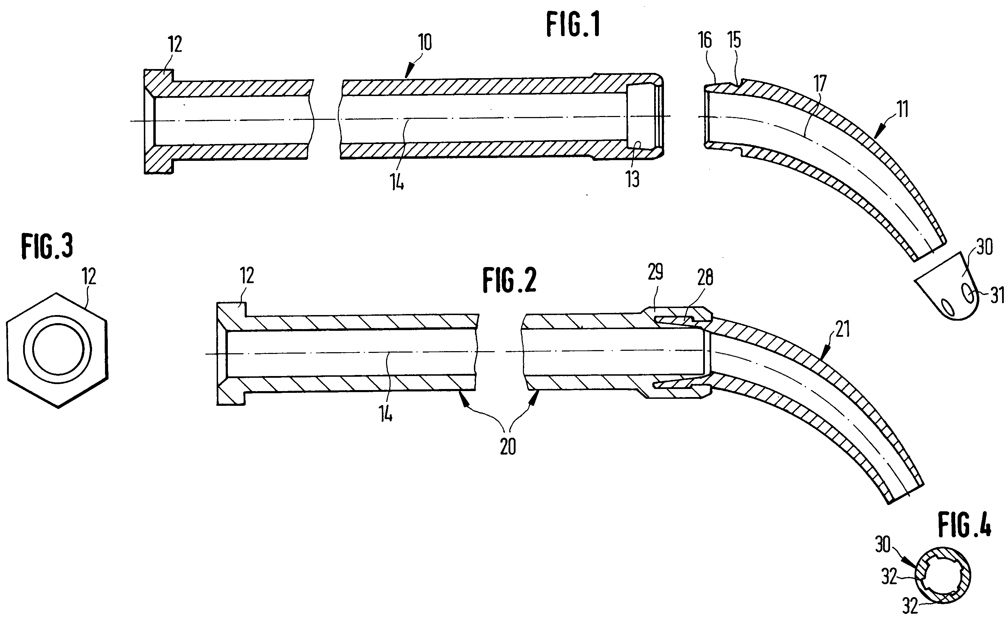

Der in Figur 1 gezeigte Behälter besteht aus einer Kartusche **10** und einer separat gefertigten Ausbringtülle **11**. Die Kartusche **10** wird von einem kreiszylindrischen Röhrchen mit geradliniger Achse **14** gebildet, das an seinem hinteren Ende einen nach außen ragenden Flansch **12** zum Einsetzen in ein (nicht gezeigtes) Applikationsinstrument aufweist. Am vorderen Ende ist die Kartusche **10** mit einer inneren Ringnut **13** versehen.

Die Ausbringtülle **11** besteht aus einem mit konstantem Radius gekrümmten Röhrchen mit kreisförmigem Querschnitt, das an seinem Eintrittsende eine von einer Ringnut **15** begrenzte Verdickung **16** zum Eingriff in die Ringnut **13** der Kartusche **10** aufweist. Am Eintrittsende fluchtet die Mittellinie **17** der Ausbringtülle **11** mit der Achse **14** der Kartusche **10**; am Austrittsende bildet sie dagegen mit der Achse **14** einen Winkel, der mindestens 45° bis 90°, vorzugsweise 60° (wie in dem gezeigten Ausführungsbeispiel) oder mehr, beträgt.

Es ist zweckmäßig, bei der Fertigung eine Krümmung über einen möglichst großen Winkel vorzusehen, so daß sich die für den jeweiligen Anwendungsfall geeignete Neigung der Austrittsöffnung einfach durch Kürzen der Tülle **11** erzielen läßt.

Am Eintrittsende stimmt der Innendurchmesser der Ausbringtülle **11** mit dem der Kartusche **10** überein. In dem gezeigten Ausführungsbeispiel beträgt dieser Innendurchmesser 1,5 bis 5 mm, vorzugsweise ca. 2,5 mm. Zum Austrittsende hin verjüngt sich der Innendurchmesser der Tülle **11** auf einen Wert von 1,5 bis 3 mm, vorzugsweise etwa 2 mm, wobei die exakte Kreisform des Innenquerschnitts über die gesamte Länge der Ausbringtülle **11** beibehalten ist. Dadurch wird eine laminare Strömung des Behälterinhalts gewährleistet und Veränderungen der Eigenschaften infolge von Änderungen der Materialstruktur vermieden.

Auch die Wandstärke der gekrümmten Ausbringtülle **11** nimmt von der Stelle der Ringnut **15** bis zum Austrittsende hin kontinuierlich ab. Dies ergibt bei insgesamt hoher Formstabilität eine feine Spitze, die es gestattet, den Behälterinhalt an kleinen Behandlungsorten, etwa in kleine Zahnkavitäten, exakt zu applizieren.

Die im vorderen Ende der Kartusche **10** gebildete Ringnut **13** und die am Eintrittsende der Ausbringtülle **11** gebildete Verdickung **16** sind komplementär zueinander geformt und bilden eine Schnappverbindung, um die die Tülle **11** relativ zu der Kartusche **10** um die Kartuschenachse **14** drehbar ist. Beim Ausbringen des Behälterinhalts läßt sich das Austrittsende der Tülle **11** bei festgehaltener Kartusche **10** jeweils mit dem günstigsten Winkel auf die Behandlungsstelle richten.

Der in Figur 2 gezeigte Behälter unterscheidet sich von dem nach Figur 1 dadurch, daß die Ausbringtülle **21** an ihrem hinteren Ende einen ringförmigen Ansatz **28** mit einem etwas vergrößerten Innendurchmesser aufweist, der in das Material eines am Austrittsende der Kartusche **20** vorhandenen verdickten Flansch **29** fest eingebettet ist. Die Einbettung erfolgt im Zuge eines Zweikomponenten-Spritzgußverfahrens, bei dem in einem ersten Arbeitsschritt die Tülle **21** geformt und in einem zweiten Arbeitsschritt die Kartusche **20** derart angeformt wird, daß der Ansatz **28** der Tülle **21** mit dem Flansch **29** der Kartusche **20** verschmilzt.

Der am hinteren Ende der Kartusche **10**, **20** vorgesehene Flansch **12** kann eine kreiszylindrische Außenfläche haben. Wie in Figur 3 gezeigt, hat er jedoch vorzugsweise eine von einem Kreiszylinder verschiedene Form, vorzugsweise die eines sechseckigen Prismas. Dadurch wird die für die Handhabung günstige Tatsache erreicht, daß beim Einlegen der Kartusche **10**, **20** in das Applikationsinstrument das Ausbringende der Tülle **11** diesem gegenüber seine Orientierung beibehält. Die in Figur 3 gezeigte Gestaltung ist bei der Kartusche nach Figur 1 ebenso wie bei der nach Figur 2 anwendbar.

Kartusche **10**, **20** und Tülle **11**, **21** sind Kunststoff-Spritzteile. Zur Aufnahme einer lichtempfindlichen Masse ist der Kunststoff beider Teile lichtundurchlässig, der der Kartusche **10**, **20** vorzugsweise schwarz. Die Ausbringtülle **11**, **21** ist dagegen zur Kennzeichnung des Behälterinhalts aus entsprechend gefärbtem Kunststoff hergestellt.

Figur 1 zeigt eine Verschlußkappe **30** für die Ausbringtülle **11**, die nahe ihrer Spitze mit Luftschlitzen **31** versehen ist. Die Luftschlitze **31** dienen dem Druckausgleich und verhindern, daß Druck- oder Temperaturänderungen zu lokalen Krafteinwirkungen auf die am Tüllenende anstehende Masse führen. Die Kappe **30** kann ebenso auch bei dem Ausführungsbeispiel nach Figur 2 vorgesehen sein.

Anstelle der in Figur 1 gezeigten, die Kappe **30** durchsetzenden Luftschlitze **31** können gemäß Figur 4 auch Luftschlitze **32** in Form von in der Kappeninnenwand angeordneten Axialnuten ausgebildet sein.

Der Behälter wird im zusammengesetzten Zustand und mit einer Füllung der betreffenden Dental- oder sonstigen pastösen Masse geliefert, wobei das Austrittsende der Tülle **11**, **21** mit der Kappe **30** und das mit dem Flansch **12** versehene hintere Ende der Kartusche **10**, **20** durch einen (nicht gezeigten) Kolben verschlossen sind. Zum Gebrauch wird der Behälter in ein Applikationsinstrument eingelegt, das die Kartusche **10**, **20** an dem Flansch **12** erfaßt und einen Stößel zum Vorschieben des Kolbens aufweist.

## Patentansprüche

1. Behälter zum Lagern und Ausbringen einer Masse, insbesondere einer Dentalmasse, mit einer kreiszylindrischen Kartusche (**10**, **20**) zur Aufnahme der Masse und einer mit der Kartusche (**10**, **20**) kommunizierenden Ausbringtülle (**11**, **21**) in Form eines starren, gekrümmten und sich zu seinem Ende hin allmählich verjüngenden Röhrchens, dessen Eintrittsöffnung mit der Kartuschenachse (**14**) fluchtet und dessen Austrittsöffnung dazu geneigt ist,
dadurch **gekennzeichnet**, daß das die Ausbringtülle (**11**, **21**) bildende Röhrchen an seiner Eintrittsöffnung die gleiche Größe hat wie die Kartusche (**10**, **20**), kreisbogenförmig gekrümmt ist und sich derart verjüngt, daß seine innere Querschnittsform bis zur Austrittsende durchgehend kreisförmig ist.

2. Behälter nach Anspruch 1, wobei die Ausbringtülle (**11**, **21**) mit ihrer Eintrittsöffnung um die Kartuschenachse (**14**) drehbar ist.

3. Behälter nach Anspruch 1 oder 2, wobei die Ausbringtülle (**11**) im Austrittsende der Kartusche (**10**) durch eine Schnappverbindung gehalten ist.

4. Behälter nach Anspruch 1, wobei die Kartusche (**20**) an die Ausbringtülle (**21**) angeformt ist.

5. Behälter nach Anspruch 4, wobei die Ausbringtülle (**21**) mit einem hinteren Flansch (**28**) in das Material der Kartusche (**20**) eingebettet ist.

6. Behälter nach Anspruch 4 oder 5, wobei das zum Eingriff in ein Applikationsinstrument dienende hintere Kartuschenende eine von einem Kreiszylinder verschiedene Form hat.

7. Behälter nach einem der vorhergehenden Ansprüche, wobei sich die Wandstärke der Ausbringtülle (**11**, **21**) von der Einzur Austrittsöffnung allmählich verringert.

8. Behälter nach einem der vorhergehenden Ansprüche, wobei die Achse der Austrittsöffnung der Ausbringtülle (**11**, **21**) mit der Kartuschenachse (**14**) einen Winkel von mindestens 45° bis 90°, vorzugsweise mindestens 60°, bildet.

9. Behälter nach einem der vorhergehenden Ansprüche, wobei der Innendurchmesser der Kartusche (**10**, **20**) 1,5 bis 5 mm, vorzugsweise im wesentlichen 2,5 mm, beträgt.

10. Behälter nach einem der vorhergehenden Ansprüche, wobei das Verhältnis von Länge zu Innendurchmesser der Kartusche (**10**, **20**) mindestens 10 beträgt.

11. Behälter nach einem der vorhergehenden Ansprüche, wobei die Austrittsöffnung der Ausbringtülle (**11**, **21**) einen Innendurchmesser von 1,5 bis 3 mm, vorzugsweise im wesentlichen 2 mm, aufweist.

12. Behälter nach einem der vorhergehenden Ansprüche, wobei die Kartusche (**10**, **20**) und die Ausbringtülle (**11**, **21**) aus in einem Spektralbereich undurchlässigem Material bestehen.

13. Behälter nach Anspruch 12, wobei die Kartusche (**10, 20**) und/oder oder die Ausbringtülle (**11**, **21**) eine den Behälterinhalt kennzeichnende Farbe hat.

14. Behälter nach einem der vorhergehenden Ansprüche, umfassend eine mit Luftschlitzen (**31**, **32**) versehene Kappe (**30**) zum Verschließen der Ausbringtülle (**11**, **21**).
